# EUROPEAN PATENT SPECIFICATION

(11) **EP 1 714 840 B1**
(45) Date of publication and mention of the grant of the patent: **13.10.2010**
(21) Application number: 06005646.2
(22) Date of filing: 20.03.2006
(51) Int. Cl.: B60R 21/231

(54) **Airbag apparatus, passenger protection system, and vehicle**
Airbagvorrichtung, Insassenschutzsystem und Fahrzeug
Dispositif d'airbag, système de protection des passagers et véhicule

(30) Priority: 19.04.2005 JP 2005121681
(43) Date of publication of application: 25.10.2006
(73) Proprietor: TAKATA CORPORATION, Minato-ku, Tokyo 106-8510 (JP)
(72) Inventor: Kumagai, Masayoshi, c/o Takata Corporation, Minato-ku Tokyo 106-8510 (JP); Abe, Kazuhiro, c/o Takata Corporation, Minato-ku Tokyo 106-8510 (JP)
(74) Representative: Vossius & Partner

(56) References cited:
- EP-A- 1 568 545
- EP-A1- 1 279 565
- EP-A1- 1 338 481
- DE-A1- 19 860 804
- US-A1- 2002 149 181
- US-A1- 2003 116 945

## Description

The present invention relates to a technique for protecting a driving passenger by an airbag in a vehicle such as an automotive vehicle or the like.

Hitherto, various types of airbag apparatus for protecting a passenger in case of a vehicle accident have been proposed. For example, Patent Document 1 shown below discloses a technique for alleviating an impact applied to a driving passenger by a structure in which an airbag is inflated in front of the driving passenger and an annular steering wheel which defines a drag surface for the airbag rotates toward the front of the vehicle in case of an occurrence of a vehicle accident (see e.g. JP-U-2-66368 (Patent Document 1))

EP 1 279 565 A relates to an occupant protection device, according to the preamble of claim 1, which can adequately protect an occupant by combining an airbag which expands in front of the upper half of the body of an occupant and a knee bag which expands in front of the legs of the occupant.

DE 198 60 804 A1 relates to a driver's airbag arrangement that has at least one folded driver's airbag built into the dashboard that can be filled by a gas generator and can unfold in front of the driver via an airbag outlet opening in the top of the dashboard and covered by an airbag flap.

US 2002/0149181 A1 relates to a restraint device for an occupant in a vehicle having a steering wheel, a dashboard with a lower end limiting a footwell, an A-pillar and a windshield. A first gas bag is provided for protecting the thorax area of a vehicle occupant, and a second gas bag is provided for supporting the first gas bag. In the deployed condition the second gas bag extends at least partly over the windshield of the vehicle.

US 2003/0116945 A1 relates to a passenger protecting device for protecting a person in a vehicle including an arm-protecting airbag to be inflated in front of an arm of the passenger, and a gas generator connected to the arm-protecting airbag for inflating the same. The arm-protecting airbag may be formed with a knee bag, a driver airbag or passenger airbag.

In the airbag apparatus stated in JP-U-2-66368, the structure in which the drag surface for the airbag which is deployed and inflated in case of the occurrence of the vehicle accident is defined by means of the steering wheel is proposed. However, in the airbag apparatus of this type, it is required to improve protection of the driving passenger by securing the drag surface for the airbag which is deployed and inflated in a passenger protection area in case of the occurrence of the vehicle accident. For example, in a structure in which an established steering wheel is downsized, in a structure in which the steering wheel is formed into different forms other than the annular shape, or in a structure in which the established airbag is upsized, the outer shape of the steering wheel is relatively small with respect to the size of the airbag, and hence there may be a case in which the drag surface for the airbag can hardly be secured by the steering wheel. Therefore, a technique which is effective for protecting the driving passenger in such cases as well is required. Also, it is also required to improve protection of the passenger by alleviating the impact applied to the driving passenger when the driving passenger is constrained by the airbag as much as possible.
In view of such points, it is an object of the present invention to provide a technique which is effective for improving protection of a driving passenger using the airbag in case of a vehicle accident.

The present invention is configured in order to achieve the object described above. The present invention can be applied to techniques for improving protection of a driving passenger in various types of vehicles, commencing with automotive vehicles, such as buses, trains, boats or the like.

In order to achieve the object described above, a first aspect of the present invention is configured as an airbag apparatus as stated in Claim 1.
The airbag apparatus stated in Claim 1 is an apparatus to be mounted to a vehicle, including at least a single airbag and gas supply mechanism. The airbag apparatus of the present invention may have a structure including a plurality of airbags with an additional airbag combined with the single airbag.
The single airbag of the present invention is configured as an airbag which is deployed and inflated in a passenger protection area, for example, for the head and the chest of a driving passenger, by supply of gas from the gas supply mechanism for deployment and inflation. The gas supply mechanism of the present invention has a function to supply gas for deployment and inflation at least to the single airbag. This gas supply mechanism is also referred to as an "inflator".

In particular, the single airbag of the present invention has a structure defining at least a first airbag section and a second airbag section when the airbag is deployed and inflated. The term "when the airbag is deployed and inflated" widely includes timing from a process of deployment and inflation to completion of inflation of the airbag.
The first airbag section of the single airbag is deployed and inflated in a space between the driving passenger and an operating member located on the front side of the vehicle with respect to the driving passenger for steering the vehicle. The second airbag section of the single airbag is deployed and inflated on the front side of the vehicle with respect to the operating member. In the present invention, a pressure from the first airbag section is received by abutment of the first airbag section with the operating member, and a pressure from the second airbag section is received by abutment of the second airbag section with a pressure receiving section located in front of the vehicle with respect to the operating member. In other words, a force (pressure) toward the front side of the vehicle acting on the single airbag is received by both of the operating member which defines a drag surface for the airbag and the pressure receiving section. Commencing with an annular steering wheel, the term "the operating member for steering the vehicle" widely includes various shapes of members for steering the vehicle. The term "pressure receiving section" may be anything as long as it can receive the pressure from the second airbag section by coming into interference (abutment) with the second airbag section which is deployed and inflated, and may be made up of a rigid member, a resilient member, or a plastic body as needed. The deploying and inflating operation of the single airbag in the present invention can be adjusted by setting the shape of the airbag itself, the number or the shape of straps or openings (vent holes) to be provided on the airbag, the number or the shape of the compartments in the airbag as needed.

According to the structure of the airbag apparatus in Claim 1 as described above, since the force (pressure) toward the front side of the vehicle applied from the single airbag can be received not only by the operating member, but also by the pressure receiving section which is located on the front side of the vehicle with respect to the operating member, even when the outer shape of the steering wheel is relatively small with respect to the size of the airbag, the drag surface for the airbag can be secured by the operating member and the pressure receiving section, whereby protection of the driving passenger can be improved.
In the structure in which the established steering wheel is downsized, in the structure in which the steering wheel is formed into different forms other than the annular shape, or in the structure in which the established airbag is upsized, since the outer shape of the steering wheel is relatively small with respect to the size of the airbag, there may be a case in which the drag surface for the airbag can hardly be secured. The present invention is specifically effective in such a case.

In order to achieve the object described above, a second aspect of the present invention is configured as an airbag apparatus as stated in Claim 2.
According to the airbag apparatus stated in Claim 2, the single airbag is configured in such a manner that in succession to constraint of the driving passenger by the first airbag section, the second airbag section is deployed and inflated so as to release a force that the first airbag section receives from the driving passenger to the front side the vehicle with respect to of the operating member.
Accordingly, by releasing the deployment and inflation force of the first airbag section which is directed rearwardly of the vehicle toward the front side of the vehicle with respect to the operating member by the deploying and inflating operation of the second airbag section, the impact applied to the driving passenger when the driving passenger is constrained can be reduced. More specifically, when the driving passenger is initially constrained, the impact applied to the driving passenger is primarily alleviated by the first airbag section. Then, by releasing the force that the first airbag receives from the driving passenger at the time of subsequent constraint of the driving passenger toward the front side of the vehicle with respect to the operating member by means of the second airbag section, the impact applied to the driving passenger is secondarily alleviated. Subsequently, by the second airbag coming into abutment with the pressure receiving section, the pressure receiving section defines the drag surface for the second airbag section.

According to the structure of the airbag apparatus as stated in Claim 2, the drag surface for the airbag can be secured by the operating member and the pressure receiving section and, in addition, protection of the driving passenger can further be improved by reducing the impact applied to the driving passenger at the time of constraint of the driving passenger. With the airbag apparatus in this structure, alleviation of the impact applied to the driving passenger can easily be achieved by the deploying and inflating operation of the airbag itself without mounting a mechanism such that the operating member such as the steering wheel rotates toward the front of the vehicle for alleviating the impact applied to the driving passenger.

In order to achieve the object described above, a third aspect of the present invention is configured as an airbag apparatus as stated in Claim 3.
According to the airbag apparatus stated in Claim 3, a pressure from the second airbag section of the single airbag section is received by a pressure receiving section made up of at least one of a vehicle component and the additional airbag located on the front side of the vehicle with respect to the operating member. The "vehicle component" widely includes various members located on the front side of the vehicle with respect to the operating member and installed in the vehicle side. For example, the vehicle components may be composed of a member which is already installed in the vehicle, such as a front windshield glass, an interior panel, or a meter. The "additional airbag" is configured as an airbag that is deployed and inflated on the front side of the vehicle with respect to the operating member. The additional airbag may be specifically used as the pressure receiving section, or may be used also as the airbag that is deployed and inflated on the front side of the vehicle with respect to the operating section in order to protect the driving passenger.

According to the structure of the airbag apparatus as stated in Claim 3, protection of the driving passenger can be improved by securing the drag surface for the single airbag by the vehicle component or the additional airbag.

In order to achieve the object described above, a fourth aspect of the present invention is configured as a passenger protection system as stated in Claim 4.
The passenger protection system state in Claim 4 includes at least an airbag apparatus, detection mechanism, control mechanism, an operating member, and a pressure receiving section.

The airbag apparatus of the present invention is an airbag apparatus having a single airbag that is deployed and inflated by being supplied with gas for deployment and inflation from gas supply mechanism, and has substantially the same structure as the airbag apparatus stated in Claim 1.

The detection mechanism of the present invention is mechanism that can detect information relating to an occurrence of a vehicle accident. The term "information relating to an occurrence of a vehicle accident" includes information which indicate an actual occurrence of the vehicle accident, information indicating a possibility of an occurrence of the vehicle accident (predictive information) or the like. As the detection mechanism, various types of sensors that can detect such as the speed acting on the vehicle, the acceleration, change of the acceleration, the relative speed or the relative distance with respect to an obstacle may be used.

The control mechanism of the present invention is configured as mechanism for controlling at least the gas supply mechanism. By outputting an operation signal to the gas supply mechanism, supply of gas for deployment and inflation from the gas supply mechanism to the airbag is started. In the present invention, the control mechanism can be configured using a CPU (calculating device), a ROM, a RAM, an input/output device and peripheral devices or the like in the known structures. The control mechanism may be configured as control mechanism specific for the passenger protection system, or may be configured as control mechanism that also executes general control of a travel/drive system or an electrical system of the vehicle.

The operation member for steering the vehicle of the present invention is configured as an operating member for steering the vehicle located on the front side of the vehicle with respect to the driving passenger. Commencing with an annular steering wheel, the "operating member for steering the vehicle" widely includes various shapes of members for steering the vehicle.

The pressure receiving section of the present invention is configured as a portion located on the front side of the vehicle with respect to the operating member. The "pressure receiving section" may be anything as long as it can receive the pressure from the second airbag section by coming into interference (abutment) with the second airbag section being deployed and inflated, and may be made up of a rigid member, a resilient member, or a plastic body or the like as needed.

In the present invention, when the control mechanism activates the gas supply mechanism based on the result detected by the detection mechanism, the first airbag section of the single airbag is deployed and inflated in a space between the driving passenger and the operating member to constrain the driving passenger, and the second airbag section is deployed and inflated on the front side of the vehicle with respect to the operating member. In the present invention, the pressure of the first airbag section is received by the operating member, and the pressure from the second airbag section is received by the pressure receiving section.

According to the structure of the passenger protection system stated in Claim 4 as described above, the force toward the front side of the vehicle acting on the single airbag can be received not only by the operating member, but also by the pressure receiving section located on the front side of the vehicle with respect to the operating member. Therefore, even when the outer shape of the steering wheel is relatively small with respect to the size of the airbag, the drag surface for the airbag can be secured by the operating member and the pressure receiving section, whereby protection of the driving passenger can be improved.
In the structure in which the established steering wheel is downsized, in the structure in which the steering wheel is formed into different forms other than the annular shape, or in the structure in which the established airbag is upsized, since the outer shape of the steering wheel is relatively small with respect to the size of the airbag, there may be a case in which the drag surface for the airbag can hardly be secured. The present invention is specifically effective in such a case.

In order to achieve the object described above, a fifth aspect of the present invention is configured as a passenger protection system as stated in Claim 5.
According to the passenger protection system stated in Claim 5, in the structure stated in Claim 4, the single airbag is configured in such a manner that in succession to constraint of the driving passenger by the first airbag section, the second airbag section is deployed and inflated so as to release a force that the first airbag section receives from the driving passenger toward the front side the vehicle with respect to of the operating member.
Accordingly, by releasing the deployment and inflation force of the first airbag section which is directed rearwardly of the vehicle toward the front side of the vehicle with respect to the operating member by the deploying and inflating operation of the second airbag section, the impact applied to the driving passenger when the driving passenger is constrained can be reduced. More specifically, when the driving passenger is initially constrained, the impact applied to the driving passenger is primarily alleviated by the first airbag section. Then, by releasing the force that the first airbag receives from the driving passenger at the time of subsequent constraint of the driving passenger toward the front side of the vehicle with respect to the operating member by means of the second airbag section, the impact applied to the driving passenger is secondarily alleviated. Subsequently, by the second airbag coming into abutment with the pressure receiving section, the pressure receiving section defines a drag surface for the airbag for the second airbag section.

According to the structure of the passenger protection system as stated in Claim 5, the drag surface for the airbag can be secured by the operating member and the pressure receiving section and, in addition, protection of the driving passenger can further be improved by reducing the impact applied to the driving passenger at the time of constraint of the driving passenger. With the airbag apparatus in this structure, alleviation of the impact applied to the driving passenger by the deploying and inflating operation of the airbag itself can easily be achieved without mounting a mechanism such that the operating member such as the steering wheel rotates toward the front of the vehicle for alleviating the impact applied to the driving passenger.

In order to achieve the object described above, a sixth aspect of the present invention is configured as a passenger protection system stated in Claim 6.
In the structure stated in Claim 4 or Claim 5, the passenger protection system stated in Claim 6 further includes an additional airbag that is deployed and inflated on the front side of the vehicle with respect to the operating member based on a result detected by the detection mechanism. The pressure receiving section is made up of at least one of the vehicle component located on the front side of the vehicle with respect to the operating member and the additional airbag. The "vehicle component" widely includes various members located on the front side of the vehicle with respect to the operating member and installed in the vehicle side. For example, the vehicle component may be composed of a member which is already installed in the vehicle, such as a front windshield glass, an interior panel, or a meter. The "additional airbag" is configured as an airbag that is deployed and inflated on the front side of the vehicle with respect to the operating member. The "additional airbag" is configured as an airbag that is deployed and inflated on the front side of the vehicle with respect to the operating member. The additional airbag may be specifically used as the pressure receiving section, or may be used also as the airbag that is deployed and inflated on the front side of the vehicle with respect to the operating section in order to protect the driving passenger.

According to the structure of the airbag apparatus as stated in Claim 6, protection of the driving passenger can be improved by securing the drag surface for the single airbag by the vehicle component or the additional airbag.

In order to achieve the object described above, a seventh aspect of the present invention is configured as a passenger protection system as stated in Claim 7.
According to the passenger protection system state in Claim 7, in the structure stated in Claim 6, the additional airbag as the pressure receiving section is also used as an airbag that is deployed and inflated in a leg area of the driving passenger for protecting legs of the driving passenger. This airbag is also referred to as a "knee airbag".

According to the structure of the passenger protection system stated in Claim 7, since the pressure receiving section (pressure receiving mechanism) for the airbag that protects the head or the chest of the driving passenger is also used as the airbag for protecting the legs of the driving passenger, it is a rational structure for protecting the driving passenger.

In order to achieve the object described above, an eighth aspect of the present invention for solving the above-describe problem is a vehicle as stated in Claim 8.
The vehicle stated in Claim 8 is configured as a vehicle including the passenger protection system according to any one of Claim 4 to Claim 7.

According to the structure of the vehicle stated in Claim 8, a vehicle including the airbag apparatus or the passenger protecting system in which protection of the driving passenger is improved is provided.

As described above, according to the present invention, in particular, by employing the single airbag structure in which the pressure from the first airbag section which constrains the driving passenger is received by the operating member and the pressure from the second airbag section is received by the pressure receiving section located on the front side of the vehicle with respect to the operating section when the airbag is deployed and inflated, protection of the driving passenger can be improved by using the airbag in case of a vehicle accident.

### [Best Mode for Carrying Out the Invention]

Referring now to the drawings, embodiments of the present invention will be described in detail.
Fig. 1 is a drawing showing a general structure of a passenger protection system 100 according to an embodiment of the present invention;
Fig. 2 shows an operational process of an airbag apparatus 110 in Fig. 1 viewed from the side of the vehicle;
Fig. 3 shows an operational process of the airbag apparatus 110 in Fig. 1 viewed from the side of the vehicle;
Fig. 4 shows an operational process of the airbag apparatus 110 in Fig. 1 viewed from the side of the vehicle;
Fig. 5 is a drawing of an airbag 114 in Fig. 4 viewed from a driving passenger C side, being deployed and inflated completely;
Fig. 6 is a drawing of the airbag 114 viewed from the driving passenger C side, being deployed and inflated completely in a case in which a steering wheel 28 according to another embodiment is used;
Fig. 7 is a drawing of the airbag 114 viewed from the driving passenger C side, being deployed and inflated completely in a case in which a steering wheel 38 according to another embodiment is used;
Fig. 8 is a drawing of the airbag 114 viewed from the driving passenger C side, being deployed and inflated completely in a case in which a steering wheel 48 according to another embodiment is used;
Fig. 9 shows a general structure of the passenger protection system 200 according to another embodiment;
Fig. 10 shows an operating mode of the first airbag apparatus 110 and a second airbag apparatus 120 in Fig. 9 viewed from the side of the vehicle;
Fig. 11 shows the airbag 114 and an airbag 124 in Fig. 10 viewed from the driving passenger C side, being deployed and inflated completely;
Fig. 12 shows a general structure of a passenger protection system 300 according to another embodiment;
Fig. 13 shows an operating mode of the first airbag apparatus 110 and the airbag apparatus 120 in Fig. 12 viewed from the side of the vehicle;
Fig. 14 shows a general structure of a passenger protection system 400 according to another embodiment;
Fig. 15 shows the operating mode of the first airbag apparatus 110 and the airbag apparatus 120 in Fig. 14, viewed from the side of the vehicle;
Fig. 16 shows the airbag 114 and the airbag 124 in Fig. 15 being deployed and inflated completely; and
Fig. 17 relates to another embodiment of the passenger protection system 400 in Fig. 14 and shows the airbags 114, 114 viewed from the driving passenger C side, being deployed and inflated completely.

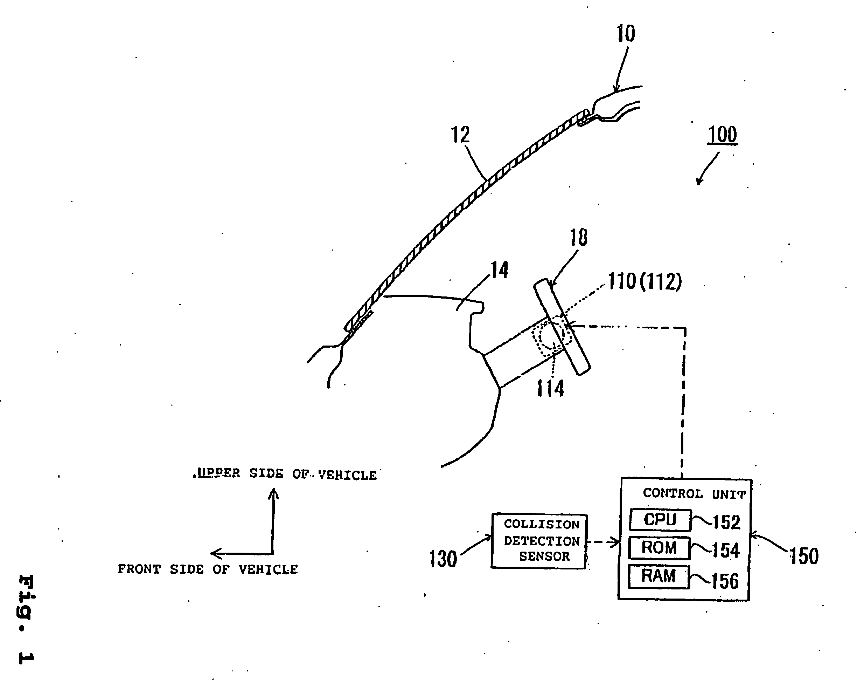

Referring now to Fig. 1, a structure of a passenger protection system 100 as a first embodiment of a "passenger protection system" in the present invention will be described. The passenger protection system 100 in this embodiment is mounted to a vehicle 10 (automotive vehicle) as the "vehicle" in the present invention.
A general structure of the passenger protection system 100 of the embodiment of the present invention is shown in Fig. 1.
The passenger protection system 100 mainly includes an airbag apparatus (airbag module) 110, a collision detection sensor 130, and a control unit or the like.
As shown in Fig. 1, a steering wheel 18 (also referred to as a "handle") for steering the vehicle 10 is arranged on the front side of the vehicle with respect to a driving passenger. The steering wheel 18 corresponds to the "operating member for steering the vehicle" in the present invention. In this embodiment, the airbag apparatus 110 is mounted to the steering wheel 18. The airbag apparatus 110 includes at least an inflator 112, and a single airbag 114. The airbag apparatus 110 corresponds to the "airbag apparatus" in the present invention. The "airbag apparatus" of the present invention can be configured with the collision sensor 130 and the control unit included in the airbag apparatus 110. The airbag apparatus 110 may have a structure including a plurality of airbags with an additional airbag combined with the single airbag 114.

The airbag 114 is configured as a single airbag body (bag body), and is stored in an airbag storage section in a state of being folded into a predetermined folded shape. The airbag 114 corresponds to the "single airbag" in the present invention. The airbag 114 has a function for constraining the passenger by being deployed and inflated in a passenger protection area in a predetermined mode in case of an occurrence of a vehicle accident. The airbag 114 includes one or a plurality of straps 115, described later, attached in the interior thereof, so that the shape of the airbag at the time of deployment and inflation is controlled by the strap(s) 115. A structure in which an opening (vent hole) is provided on the airbag 114 as needed so as to control the amount of gas flow discharged from the interior of the airbag to the outside of the airbag through the opening may also be employed. It is also possible to partition the interior of the airbag 114 into a plurality of areas by a separate panel of the like so that the mode of deployment and inflation of the respective sections of the airbag can be controlled. In this case, it may have a structure in which movement of gas among the plurality of areas is allowed, or a structure in which the movement of gas among the plurality of areas is not permitted.

The inflator 112 has a function as gas supply mechanism for supplying gas for deployment and inflation to the airbag 114 in case of the occurrence of the vehicle accident. This inflator 112 corresponds to the "gas supply mechanism" in the present invention.

The collision detection sensor 130 is configured as a sensor having a function to detect the actual occurrence of a collision accident of the vehicle 10. The collision detection sensor 130 is configured as mechanism that can detect information relating to an occurrence of a vehicle accident, and corresponds to the "detection mechanism" in the present invention. As the collision detection sensor 130, an acceleration type collision sensor that detects the occurrence of a collision based on accelerations in three axial directions (X-axis, Y-axis, and Z-axis) that acts on the vehicle 10 in case of a collision of the vehicle. Instead of, or in addition to this acceleration type collision sensor, various types of sensors that can detect the speed acting on the vehicle, change of the acceleration, the relative speed or the relative distance with respect to an obstacle may be employed.

The control unit 150 includes a CPU (calculating device) 152, a ROM 154, a RAM 156, and an input/output device and peripheral devices (not shown) of a known structure, and executes various processes such as a calculation process, a determination process, a predicting process and a storage process based on information at least from the collision detection sensor 130, and has a function for outputting a control signal to the airbag apparatus 110 (inflator 112). The control unit 150 is configured as mechanism for controlling at least the inflator 112, and corresponds to the "control mechanism" in the present invention. The control unit 150 may be configured as the control mechanism specific for the passenger protection system 100 or may be configured as control mechanism that also executes general control of a travel/drive system or an electrical system of the vehicle 10.

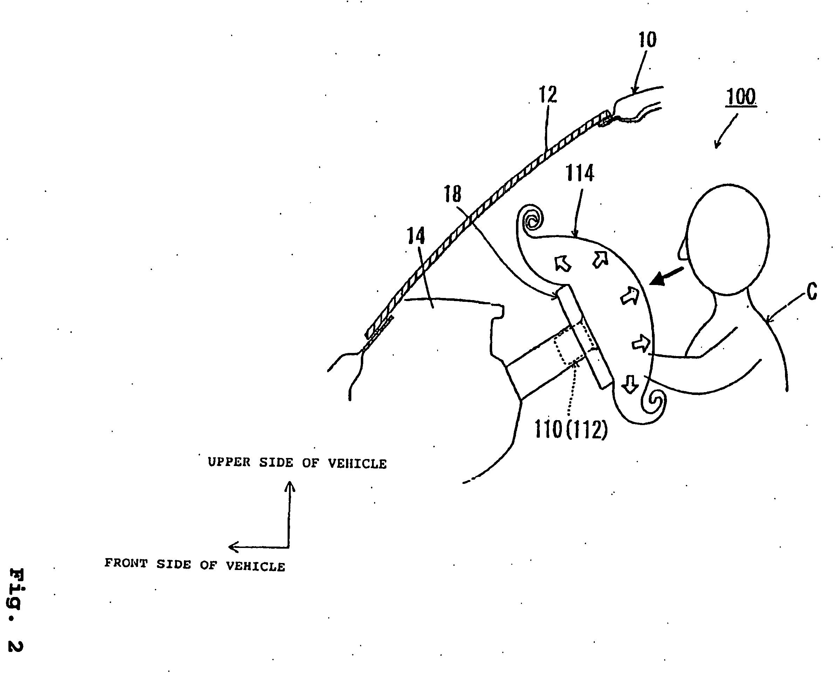

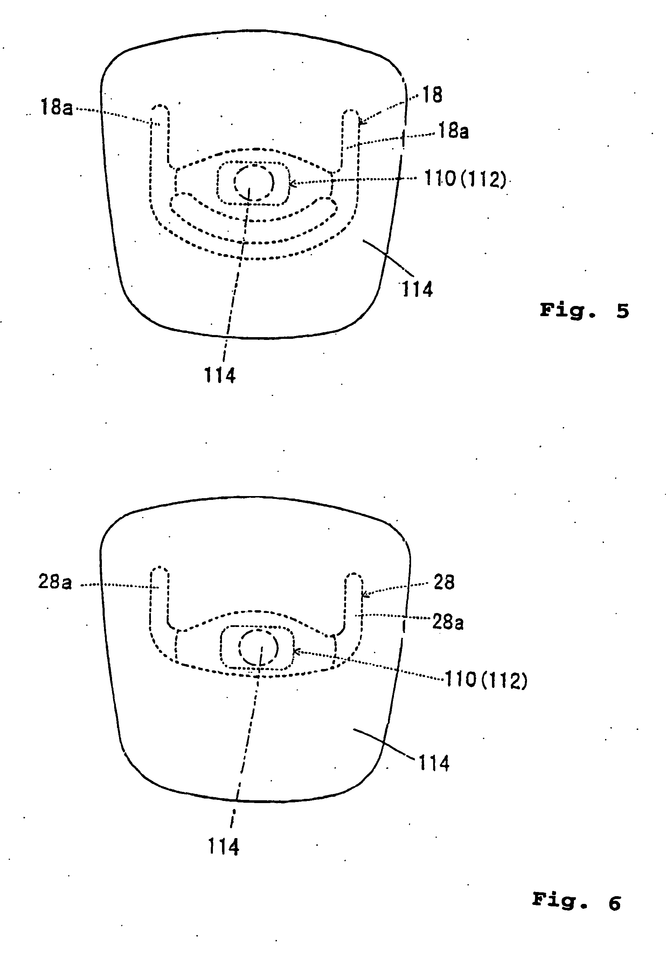

The airbag apparatus 110 of the structure described above is, in particular in this embodiment, configured so that protection of the passenger is improved by devising the operational mode of the airbag 114 during the deploying and inflating operation. Referring now to Fig. 2 to Fig. 5, the deploying and inflating operation of the airbag 114 in the airbag apparatus 110 in this embodiment will be described. Fig. 2 to Fig. 4 show an operational process of the airbag apparatus 110 in Fig. 1 when viewed from the side of the vehicle, and Fig. 5 is a drawing of the airbag 114 viewed from the driving passenger C side, being deployed and inflated completely.

In case of vehicle accident such as a front collision of the vehicle 10, when the collision detection sensor 130 detects an occurrence of a collision, the control unit 150 outputs a control signal to the airbag apparatus 110 (inflator 112). Accordingly, gas for deployment and inflation generated from the inflator 112 starts to be supplied into the airbag 114, and the airbag 114 starts the deploying and inflating operation as shown in Fig. 2. In an initial state of the deployment and inflation, the airbag 114 is deployed and inflated toward the passenger protection area for a driving passenger C (also referred to as a "driver") who is inclining forwardly of the vehicle (in the direction indicated by an arrow in Fig. 2) due to the collision of the vehicle. The passenger protection area is an area effective for protecting the head and the chest of the driving passenger C by the airbag, and is defined between the driving passenger C and the steering wheel 18. Then, when the airbag 114 (a first airbag section 114a, described later) during deployment and inflation in the passenger protection area comes into interference (abutment) with the driving passenger C, an initial constraint starts, and an impact applied to the driving passenger C who is in the course of inclination forwardly of the vehicle is primarily alleviated.

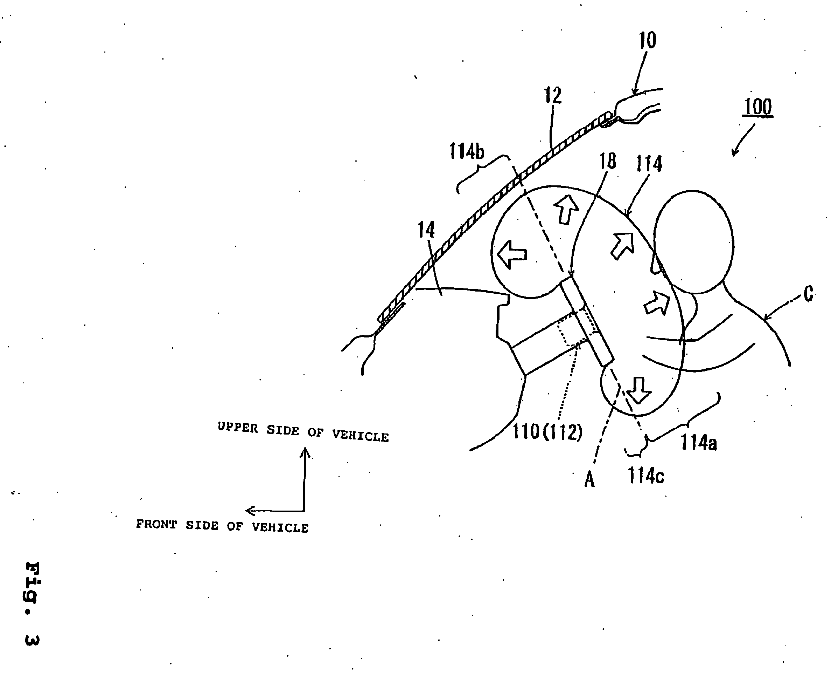

More specifically, at the initial constraint shown in Fig. 3, the airbag 114 during deployment and inflation forms a first airbag section 114a on the front side of the vehicle with respect to the driving passenger C, a second airbag section 114b and a third airbag section 114c along an outer periphery of the first airbag 114a.

The first airbag section 114a of the airbag 114 out of the respective sections of the airbag 114 is a section formed on the rear side (on the driving passenger C side) of the vehicle with respect to a steering wheel plane A along which the steering wheel 18 extends. The first airbag section 114a defines a constraint surface for constraining the head and the chest of the driving passenger C by being deployed and inflated toward the forwardly inclining driving passenger C. The first airbag section 114a is a section for constraining the driving passenger C by being deployed and inflated between the driving passenger C and the steering wheel 18, and corresponds to the "first airbag section" in the present invention.

The second airbag section 114b of the airbag 114 out of the respective sections of the airbag 114 is a section formed on the front side of the steering wheel plane A. The second airbag section 114b is deployed and inflated so as to wrap around the steering wheel and protrude to the front side of the vehicle with respect to the steering wheel plane A on the upper side of the steering wheel 18. The third airbag section 114c out of the respective sections of the airbag 114 is a section formed on the front side of the vehicle with respect to the steering wheel plane A. The third airbag section 114c is deployed and inflated so as to wrap around the steering wheel and protrude to the front side of the vehicle with respect to the steering wheel plane A on the lower side of the steering wheel 18. Both of the second airbag section 114b and the third airbag section 114c are the sections which are deployed and inflated on the front side of the vehicle with respect to the steering wheel plane A, and correspond to the "second airbag section" of the present invention.

By the deployment and inflation of the airbag 114 configured as described above, the first airbag section 114a, the second airbag section 114b, and the third airbag section 114c cover the driving passenger C side of the steering wheel 18 so as to wrap around the entirety thereof. Accordingly, the initial constraint of the driving passenger C is ensured, and the driving passenger C is prevented from coming into abutment (contact) directly with the steering wheel 18.

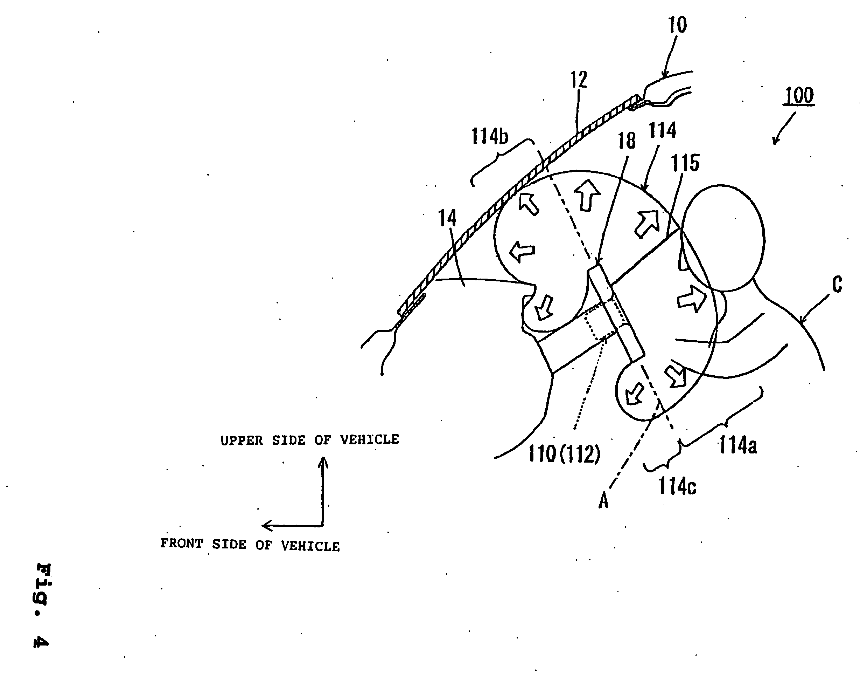

In the process from the initial constraint state shown in Fig. 3 to the state of completion of the deployment and inflation shown in Fig. 4 and Fig. 5, the impact applied to the driving passenger C initially constrained by the first airbag section 114a is secondarily alleviated by deployment of the second airbag section 114b and the third airbag section 114c toward the front side of the vehicle with respect to the steering wheel plane A. In other words, in this embodiment, part of a deployment and inflation force applied by the first airbag section 114a to the driving passenger C rearwardly of the vehicle is released toward the front side of the vehicle by the deploying and inflating operation of the second airbag section 114b and the third airbag section 114c, so that the impact applied to the driving passenger C can be reduced. Accordingly, at the time of the initial constraint of the driving passenger C, the impact applied to the driving passenger C is primarily alleviated by being reliably received by the first airbag section 114a, and then the impact applied to the driving passenger C is secondarily alleviated by releasing the force that the first airbag section 114a receives from the driving passenger C toward the front side of the steering wheel 18 (the steering wheel plane A) by the second airbag section 114b and the third airbag section 114c at the time of subsequent constraint of the driving passenger.

Subsequently, in the state in which the deployment and inflation are completed as shown in Fig. 4 and Fig. 5, the strap 115 attached to the interior of the airbag is brought into a completely tensed state, so that the movement of the first airbag section 114a toward the driving passenger C is controlled. In this state, the first airbag section 114a continually constrains the driving passenger C, while the second airbag section 114b comes into abutment with a front windshield glass 12 and an interior panel (including meters) 14 on the front side of the vehicle with respect to the steering wheel 18. At this time, an upper surface of the steering wheel 18 (the surface facing toward the driving passenger C) serves as the drag surface (abutment surface) with respect to the first airbag section 114a, and the pressure receiving sections of the front windshield glass 12 and the interior panel 14 serve as the drag surfaces (abutment surfaces) with respect to the second airbag section 114b.

In other words, in this embodiment, in addition to the steering wheel 18, the drag surfaces for the airbag 114 are defined in a wide area over the front windshield glass 12 and the interior panel 14. Accordingly, the force (pressure) that the airbag 114 receives from the driving passenger C is received by the wide area including the steering wheel 18, the front windshield glass 12 and the interior panel 14. The front wind shield glass 12 and the interior panel 14 in this case correspond to the "pressure receiving section located on the front side of the vehicle with respect to the operating member", and the "vehicle component located on the front side of the vehicle with respect to the operating member".

The vehicle 10 of this embodiment employs the steering wheel 18 in plan view as shown in Fig. 5. This steering wheel 18 is configured as a steering wheel of a mode in which an upper portion of an annular (ring-shaped) steering wheel is partly removed. With this steering wheel 18, the driving passenger C can steer the vehicle by holding and operating shaft-shaped grip members 18a, 18a extending in the vertical direction on both sides thereof.

In the recent years, a system which is referred to as a "Steer-By-Wire" or a "Steering-By-Wire" attracts an attention as the next-generation system in which a handle and a steered front wheel are mechanically separated, and with the introduction of this system, various shapes of steering wheels can be employed instead of the annular (ring-shaped) steering wheel in the related art. The steering wheel 18 of the embodiment shown in Fig. 5 is an example of the steering wheel preferably used in a case in which the Steer-By-Wire system is employed. The steering wheel in this structure can hardly be able to secure the drag surface (abutment surface) with respect to the airbag only with the steering wheel since the outer shape of the steering wheel is downsized in comparison with the steering wheel having the structure in the related art.

Therefore, this embodiment is configured to define the drag surfaces (abutment surfaces) with respect to the airbag 114 not only by the upper surface of the steering wheel of the steering wheel 18, but also by using the front windshield glass 12 and the interior panel 14. In this structure, even in the case in which the steering wheel 18 whose outer shape is downsized is used, the drag surfaces with respect to the airbag 114 can be secured.

As described above, by using the passenger protection system 100 of this embodiment, protection of the driving passenger C in case of a vehicle accident can be improved.
In other words, in this embodiment, by defining the drag surface for the first airbag section 114a with the steering wheel 18, and defining the drag surfaces for the second airbag section 114b and the third airbag section 114c with the front windshield glass 12 and the interior panel 14, even when the outer shape of the steering wheel 18 is relatively smaller than the size of the airbag 114, the drag surface with respect to the airbag 114 can be secured. In the structure in which the established steering wheel is downsized, in the structure in which the steering wheel is formed into different forms other than the annular shape, or in the structure in which the established airbag is upsized, since the outer shape of the steering wheel is relatively small with respect to the size of the airbag, there may be a case in which the drag surface for the airbag can hardly be secured by the steering wheel. This embodiment is specifically effective in such a case. When upsizing the airbag, the one having a maximum capacity of, for example, 60 litter or larger can be used.

According to this embodiment, the impact that the driving passenger C receives from the airbag 114 can be alleviated by deploying and inflating the second airbag section 114b and the third airbag section 114c toward the front side of the vehicle so as to release part of the force that the first airbag section 114a receives from the driving passenger C toward the front side of the vehicle with respect to the steering wheel 18 (the steering wheel plane A) at the time of constraint of the driving passenger C. Accordingly, protection of the driving passenger C can further be improved. When the airbag 114 in this structure is employed, the impact applied to the driving passenger can easily be alleviated by the deploying and inflating operation of the airbag 114 itself without mounting a mechanism in which the steering wheel is rotated toward the front of the vehicle in order to alleviate the impact applied to the driving passenger, that is, so-called "EA mechanism".

It is also possible to employ the steering wheel shown in Fig. 6 to Fig. 8 instead of the steering wheel 18 shown in Fig. 5.

Fig. 6 is a drawing of the airbag 114 viewed from the driving passenger C side, being deployed and inflated completely in a case in which a steering wheel 28 according to another embodiment is used.
The steering wheel 28 shown in Fig. 6 is configured as the steering wheel of a mode in which an upper portion of an annular (ring-shaped) steering wheel is partly removed. With this steering wheel 28, the driving passenger C can steer the vehicle by holding and operating shaft-shaped grip members 28a, 28a extending in the vertical direction on both sides thereof. The steering wheel 28 corresponds to the "operating member for steering the vehicle" in the present invention.

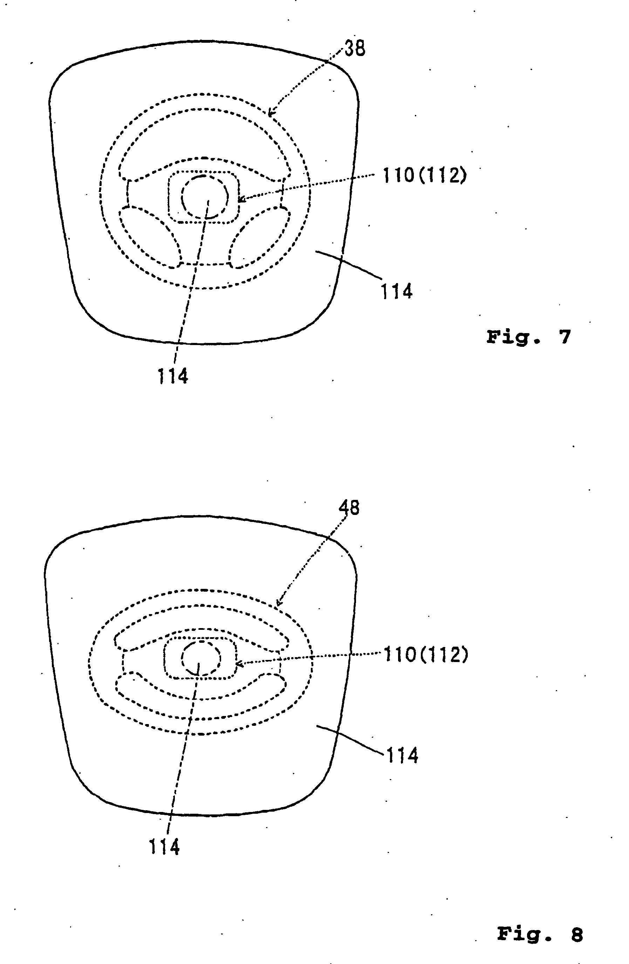

Fig. 7 shows the airbag 114 viewed from the driving passenger C side, being deployed and inflated completely in a case in which a steering wheel 38 is used.
The steering wheel 38 shown in Fig. 7 is configured as an annular (ring-shaped) steering wheel. With this steering wheel 38, the driving passenger C can steer the vehicle by holding and operating the ring portion. The steering wheel 38 corresponds to the "operating member for steering the vehicle" in the present invention.

Fig. 8 shows the airbag 114 viewed from the driving passenger C side, being deployed and inflated completely in a case in which a steering wheel 48 is used.
The steering wheel 48 shown in Fig. 8 is configured as an oval shaped (ring-shaped) steering wheel. With this steering wheel 48, the driving passenger C can steer the vehicle by holding and operating the ring portion. This steering wheel 48 corresponds to the "operating member for steering the vehicle" in the present invention.

In the case of the steering wheels 28, 38, 48 shown in Fig. 6 to Fig. 8, when the outer shape of the steering wheel is downsized as in the case of the steering wheel 18, there may be the case in which the drag surface (abutment surface) for the airbag can hardly be secured only with the steering wheel. Therefore, by using the airbag 114 which performs the deploying and inflating operation as in this embodiment, the drag surface for the airbag 114 can be secured. In this case as well, part of the deployment and inflation force applied by the first airbag section 114a to the driving passenger C rearwardly of the vehicle is released toward the front side of the vehicle by the deploying operation of the second airbag section 114b and the third airbag section 114c, whereby the impact applied to the driving passenger C by the airbag 114 is alleviated.

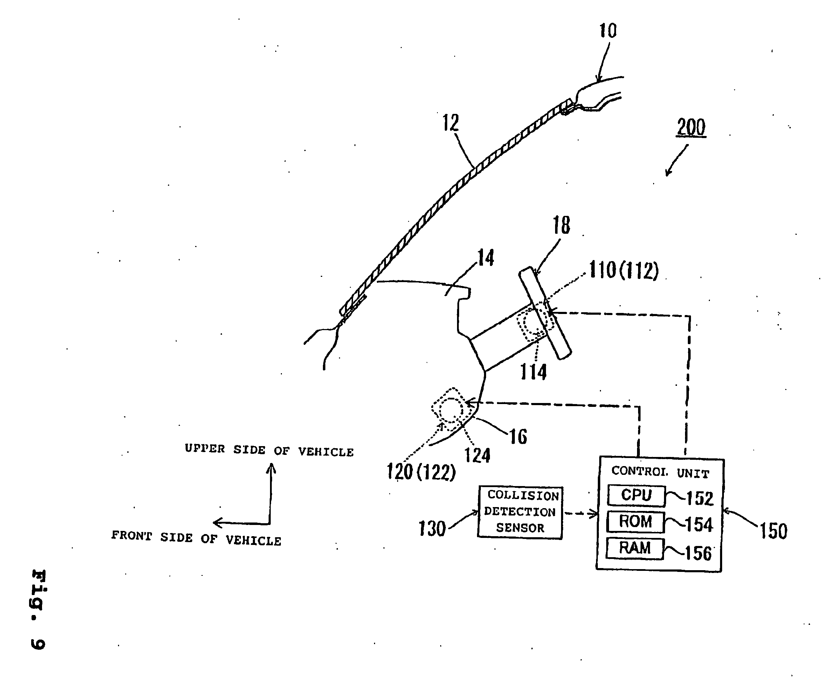

It is also possible to employ a passenger protection system 200 having a structure shown in Fig. 9 instead of the passenger protection system 100 shown in Fig. 1. Fig. 9 shows a general structure of the passenger protection system 200 according to another embodiment.

In addition to the (first) airbag apparatus 110 of the passenger protection system 100 shown in Fig. 1, the passenger protection system 200 shown in Fig. 9 includes an additional airbag apparatus 120. The airbag apparatus 120 is integrated in a lower panel 16 which is located on the lower side of the steering wheel 18, and mainly includes an inflator 122 as gas supply mechanism, and an airbag 124 stored in an airbag storage section in a state of being folded into a predetermined folded state. The airbag 124 is configured as a single airbag body (bag body), and is adapted to be deployed and inflated in a predetermined mode, described later, by gas for deployment and inflation supplied from the inflator 122 in case of the occurrence of a vehicle accident.

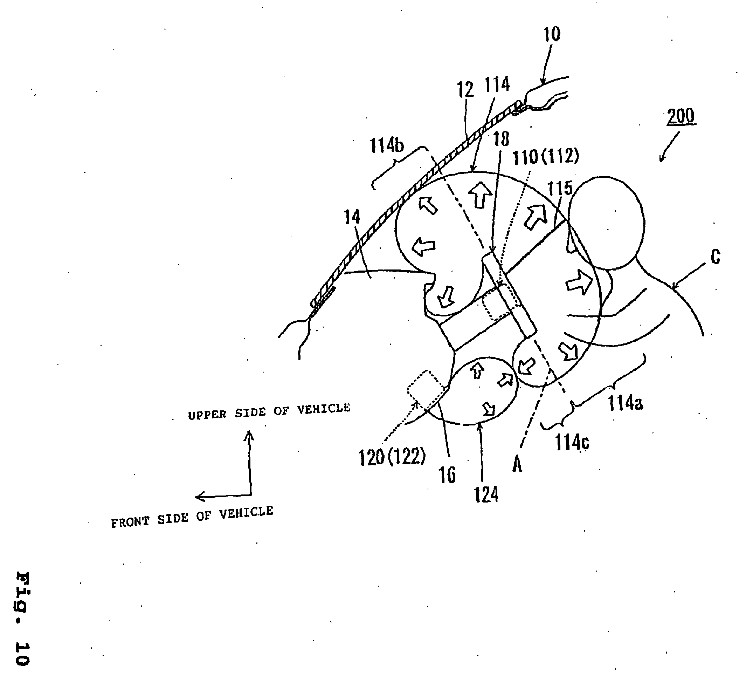

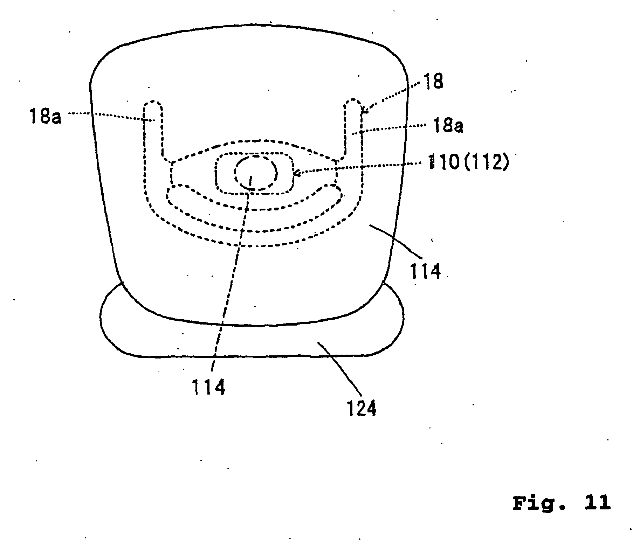

Referring now to Fig. 10 and Fig. 11, an operating mode of the passenger protection system 200 in Fig. 9 will be described in detail. Fig. 10 shows an operating mode of the first airbag apparatus 110 and the second airbag apparatus 120 in Fig. 9 viewed from the side of the vehicle, and Fig. 11 shows the airbag 114 and the airbag 124 in Fig. 10 viewed from the driving passenger C side, being deployed and inflated completely. Since the first airbag apparatus 110 is the same as the airbag apparatus 110 in the above-described passenger protection system 100, the operation of the airbag apparatus 120 is mainly described here.

When the collision detection sensor 130 detects an occurrence of a collision in case of a vehicle accident such as a front collision of the vehicle 10" the control unit 150 outputs a control signal also to the airbag apparatus 120 (inflator 122) in addition to the first airbag apparatus 110 (inflator 112). As regards the airbag apparatus 120, gas for deployment and inflation generated from the inflator 122 starts to be supplied into the airbag 124, and hence the airbag 124 starts the deploying and inflating operation. Then, the airbag 124 is deployed and inflated on the lower side of the steering wheel 18 toward the first airbag section 114a which is deployed and inflated so as to wrap around the steering wheel and protrude to the front side of the vehicle with respect to the steering wheel plane A.

In this state, the first airbag section 114a of the airbag 114 continuously constrains the driving passenger C, while the second airbag section 114b comes into abutment with the front windshield glass 12 and the interior panel (including meters) 14 and the third airbag section 114c comes into abutment with the airbag 124 on the front side of the vehicle with respect to the steering wheel 18. At this time, the upper surface (the surface facing toward the driving passenger C) of the steering wheel 18 serves as the drag surface (abutment surface) for the first airbag section 114a, the pressure receiving sections of the front windshield glass 12 and the interior panel 14 serve as the drag surfaces (abutment surfaces) for the second airbag section 114b, and the pressure receiving sections of the airbag 124 and the lower panel 16 serve as the drag surfaces (abutment surfaces) for the third airbag section 114c.

In other words, in this embodiment, the drag surfaces for the airbag 114 are defined over a wide area including the steering wheel 18, the front windshield glass 12, the interior panel 14, the airbag 124 and the lower panel 16. Accordingly, a force (pressure) that the airbag 114 receives from the driving passenger C is received by a wide area. In particular, with the structure in which the drag surfaces (abutment surfaces) for the airbag 114 are provided on the upper and lower sides of the steering wheel 18, the airbag 114 can be received on the upper and lower sides in a balanced manner. The airbag 124 in this case corresponds to the "additional airbag" in the present invention. The front windshield glass 12, the interior panel 14, the lower panel 16, and the airbag 124 in this case correspond to the "pressure receiving sections located on the front side of the vehicle with respect to the operating member", and the "vehicle components located on the front side of the vehicle with respect to the operating member" in the present invention.

The airbag 124 of the airbag apparatus 120 in Fig. 10 may be specifically used as mechanism for receiving the third airbag section 114c of the airbag 114, or may be also used as protecting mechanism for protecting the legs of the driving passenger C in addition to the function as the receiving mechanism. When the airbag 124 is used as the airbag for protecting the legs of the driving passenger C (so-called knee airbag), the airbag 124 can be configured to be deployed and inflated in the leg area of the driving passenger C so that the airbag 124 receives the third airbag section 114c in the leg area. The airbag 124 in this case corresponds to the "airbag deployed and inflated in the leg area of the driving passenger".

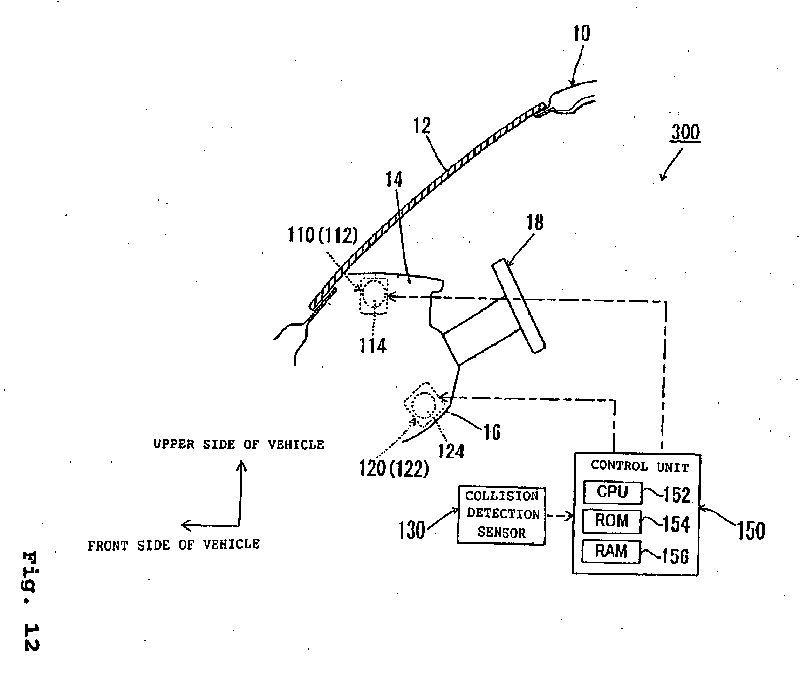

It is also possible to employ a passenger protection system 300 shown in Fig. 12 instead of the passenger protection system 200 shown in Fig. 10. Fig. 12 shows a general structure of the passenger protection system 300 according to another embodiment.
The passenger protection system 300 shown in Fig. 12 is configured to have the first airbag apparatus 110 in the passenger protection system 200 shown in Fig. 10 integrated in the interior panel 14 on front side of the vehicle with respect to the steering wheel 18.

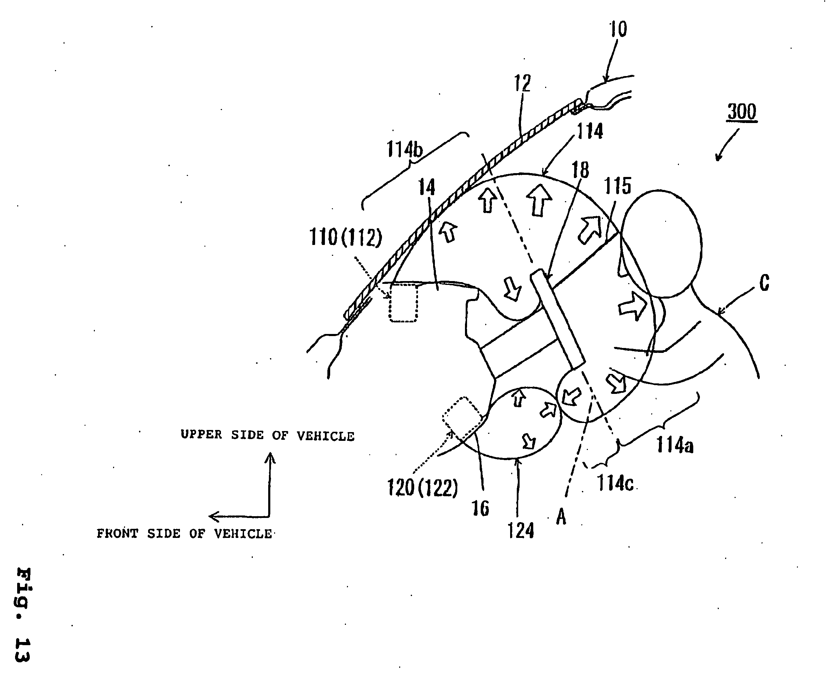

Referring now to Fig. 13, the operating mode of the passenger protection system 300 shown in Fig. 12 will be described in detail. Fig. 13 shows an operating mode of the first airbag apparatus 110 and the airbag apparatus 120 in Fig. 12 viewed from the side of the vehicle. Since the operation of the airbag apparatus 120 is the same as in the case of the passenger protection system 200, the operation of the first airbag apparatus 110 is mainly described here.

When the collision detection sensor 130 detects occurrence of the collision, in case of a vehicle accident such as a front collision of the vehicle 10, the control unit 150 outputs a control signal to the first airbag apparatus 110 (inflator 112) and also to the second airbag apparatus 120 (inflator 122). As regards the first airbag apparatus 110, the airbag 114 is deployed and inflated from the interior panel 14 side rearwardly of the vehicle toward the passenger protection area. More specifically, the airbag 114 in the course of deployment and inflation is deployed and inflated from the second airbag section 114b side to the first airbag section 114a and the third airbag section 114c. Then, an initial constraint is achieved by interference of the first airbag section 114a of the airbag 114 in the course of deployment and inflation with the driving passenger C, and hence an impact applied to the driving passenger C who is inclining toward the front side of the vehicle is alleviated.

In the process to reach a state in which deployment and inflation are completed as shown in Fig. 13, the second airbag section 114b and the third airbag section 114c are deployed to the front side of the vehicle with respect to the steering wheel plane A. In other words, the second airbag section 114b and the third airbag section 114c are deployed and inflated so as to release a force (pressure) that the first airbag section 114a receives from the driving passenger C toward the front side of the vehicle with respect to the steering wheel plane A. By the deploying and inflating operation of the second airbag section 114b and the third airbag section 114c, the impact that the driving passenger C initially constrained by the first airbag section 114a receives is secondarily alleviated.

In the state in which deployment and inflation are completed as shown in Fig. 13, the first airbag section 114a of the airbag 114 continuously constrains the driving passenger C, while the second airbag 114b comes into abutment with the front windshield glass 12 and the interior panel (including meters) 14, and the third airbag section 114c comes into abutment with the airbag 124 on the front side of the vehicle with respect to the steering wheel 18. At this time, the upper surface of the steering wheel 18 (the surface facing toward the driving passenger C) corresponds to the drag surface (abutment surface) for the first airbag section 114a, the pressure receiving sections of the front windshield glass 12 and the interior panel 14 correspond to the drag surfaces (abutment surfaces) for the second airbag section 114b, and the pressure receiving sections of the airbag 124 and the lower panel 16 correspond to the drag surface (abutment surface) for the third airbag section 114c. Accordingly, a force (pressure) that the airbag 114 receives from the driving passenger C is received by a wide area. In particular, with the structure in which the drag surfaces (abutment surfaces) for the airbag 114 are provided on the upper and lower sides of the steering wheel 18, the airbag 114 can be received on the upper and lower sides in a balanced manner.

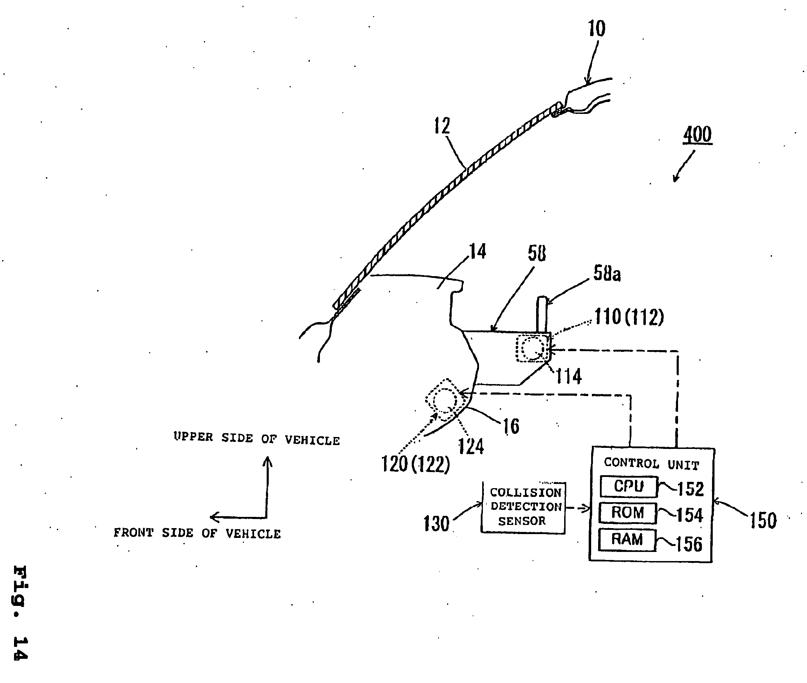

It is also possible to employ a passenger protection system 400 in a structure 200 shown in Fig. 14 instead of the passenger protection system shown in Fig. 9. Fig. 14 shows a general structure of the passenger protection system 400 according to another embodiment.

In the passenger protection system 400 shown in Fig. 14, instead of the steering wheel of the type shown in Fig. 5 to Fig. 8, a steering device 58 provided with a shaft-shaped grip member 58a extending in the vertical direction is employed instead of the steering wheel of the type shown in Fig. 5 to Fig. 8. With this steering device 58, the driving passenger C can steer the vehicle by gripping and operating the single grip member 58a with his/her hand or fingers. This grip member 58a is also referred to as a "joy stick" used for game playing machine or the like. The grip member 58a is arranged on the front side of the vehicle with respect to the driving passenger, and corresponds to the "operating member for steering the vehicle". The steering device 58 includes the first airbag apparatus 110 integrated therein.

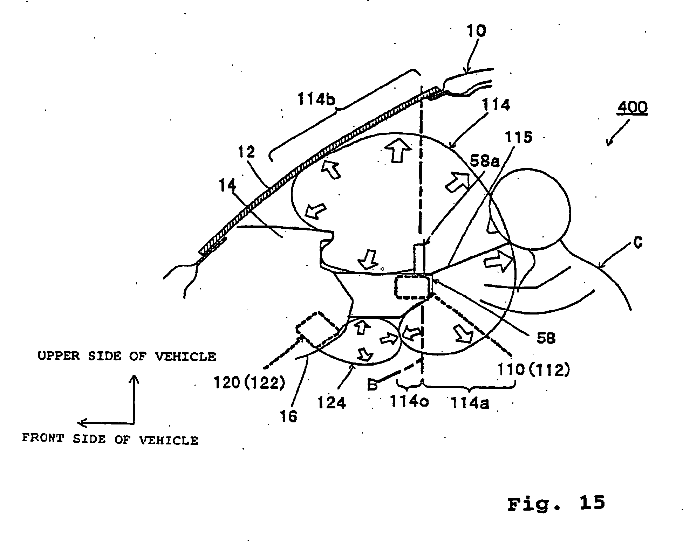

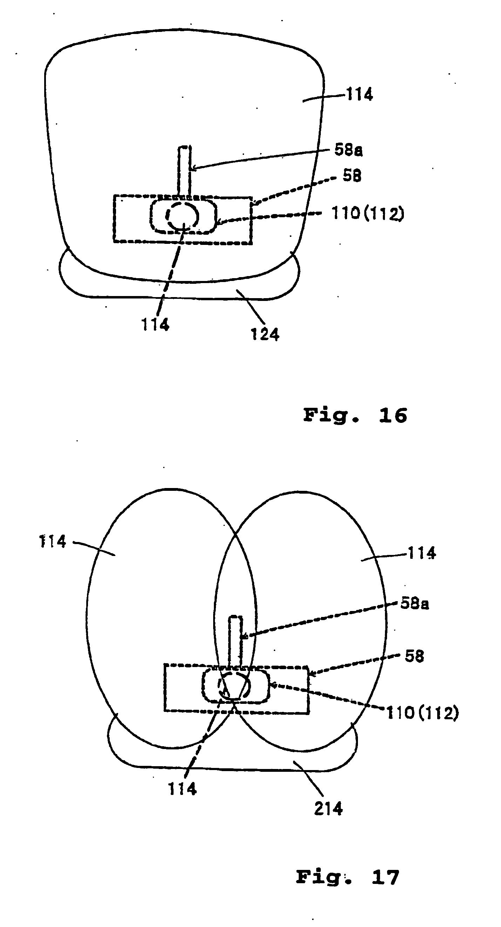

Referring now to Fig. 15 and Fig. 16, an operating mode of the passenger protecting system 400 shown in Fig. 14 will be described in detail. Fig. 15 shows the operating mode of the first airbag apparatus 110 and the airbag apparatus 120 in Fig. 14 viewed from the side of the vehicle, and Fig. 16 shows the airbag 114 and the airbag 124 in Fig. 15 viewed from the driving passenger C side, being deployed and inflated completely.

When the driving passenger C is initially constrained by the airbag 114, the airbag 114 in the course of deployment and inflation forms the first airbag section 114a on the front side of the vehicle with respect to the driving passenger C, and then the second airbag section 114b and the third airbag section 114c are formed along the outer periphery of the first airbag section 114a. In the process to reach a state in which deployment and inflation are completed as shown in Fig. 15 and Fig. 16, the second airbag section 114b and the third airbag section 114c are deployed to the front side of the vehicle with respect to a grip member plane B, and hence part of a deployment and inflation force applied by the first airbag section 114a to the driving passenger C toward the rear side of the vehicle is released toward the front side of the vehicle by the deploying operation of the second airbag section 114b and the third airbag section 114c, whereby the impact that the driving passenger C who is initially constrained by the first airbag section 114a is secondarily alleviated.

Subsequently, in the state in which deployment and inflation are completed as shown in Fig. 15 and Fig. 16, a strap 115 attached in the airbag is brought into a completely tensed state, so that the movement of the first airbag section 114a toward the driving passenger C is controlled. In this state, the first airbag section 114a continuously constrains the driving passenger, while the second airbag section 114b comes into abutment with the front windshield glass 12 and the interior panel (including meters) on the front side of the vehicle with respect to the grip member 58a. At this time, the back surface (the surface facing toward the driving passenger C) of the grip member 58a serves as the drag surface (abutment surface) for the first airbag 114a, the pressure receiving sections of the front windshield glass 12 and the interior panel 14 serve as the drag surfaces (abutment surfaces) for the second airbag section 114b, and the pressure receiving sections of the airbag 124 and the lower panel 16 serve as the drag surfaces (abutment surfaces) for the third airbag section 114c. Accordingly, the force (pressure) that the airbag 114 receives from the driving passenger C toward the front of the vehicle is received by a wide area. In particular, with the structure in which the drag surfaces (abutment surfaces) for the airbag 114 are provided on the upper and lower sides of the steering wheel 18, the airbag 114 can be received on the upper and lower sides in a balanced manner.

In the passenger protection system 400 shown in Fig. 14, the airbag 114 in the first airbag apparatus 110 may also configured to employ a pair of left and right airbags 114, 114, so-called a "twin airbag" which is deployed and inflated, for example, as shown in Fig. 17. In this structure, the same effects and advantages as in the case in which the single airbag 114 is employed are achieved. The structure of the twin airbag system may be employed in the passenger protection system 100, 200, and 300 in the same manner.

### (Other Embodiments)

The present invention is not limited to the embodiments described above, and various applications and modifications may be considered. For example, embodiments in which the above-described embodiments are applied may also be implemented.

In the respective embodiment described above, the cases in which the drag surfaces for the second airbag section 114b or the third airbag section 114c of the airbag 114 are defined by using the vehicle components such as the front windshield glass 12 and the interior panel 14 and by using the additional airbag such as the airbag 124 have been described. However, in the present invention, a structure in which the drag surfaces are formed by using at least one of the vehicle components and the additional airbag may also be employed.

As in the above-described embodiments, the present invention can be applied to the vehicle including the operating members of various shapes commencing with the annular (ring-shaped) steering wheel. As a structure other than the operating members described above as the embodiments, a structure such as a keyboard, a handy keyboard, a game machine controller may also be employed. In the structure in which the established steering wheel is downsized, in a structure in which the steering wheel is formed into different forms other than the annular shape, or in the structure in which an established airbag is upsized, since the outer shape of the steering wheel is relatively small with respect to the size of the airbag, and hence there may be a case in which the drag surface for the airbag can hardly be secured. The present invention is specifically effective in such a case.

Also, in the present invention, the positions to install the airbags such as the airbag 114 and the airbag 124 described in the respective embodiments described above may be selected as needed, and commencing with the steering wheel 18, the steering device 58, the interior panel 14 and the lower panel 16, the airbags may also be stored in other vehicle members.

In the present invention, in order to realize the desired deploying and inflating operation of the airbag 114 as stated in the above-described respective embodiments, the shape of the airbag itself, the number or the shape of the straps or the openings (vent holes), and the number or the shape of compartments in the airbag can be set as needed.

Although the structure of the airbag apparatus and the passenger protection system to be mounted to the vehicle have been described, the present invention may be applied to various types of vehicles other than the automotive vehicles, such as buses, trains, or boats.

## Claims

1. An airbag apparatus to be mounted to a vehicle (10) comprising: a single airbag (114; 124) that is deployed and inflated by supply of gas for deployment and inflation from gas supply mechanism (112; 122),
**characterized in that** the single airbag defines a first airbag section (114a) for constraining a driving passenger (C) by being deployed and inflated in a space between the driving passenger and an operating member (18; 28; 38, 48) for steering the vehicle located on the front side of the vehicle with respect to the driving passenger; and a second airbag section (114b, 114c) to be deployed and inflated on the front side of the vehicle with respect to the operating member,
**in that** a pressure from the first airbag section is received by the operating member, and a pressure from the second airbag section is received by a pressure receiving section (12, 14) located on the front side of the vehicle with respect to the operating member and
**in that** the single airbag is configured in such a manner that, in succession to constraint of the driving passenger by the first airbag section, the second airbag section is deployed and inflated so as to release a force received by the first airbag section from the driving passenger to the front side of the vehicle with respect to the operating member.

2. The airbag apparatus according to Claim 1,
**characterized in that** the pressure from the second airbag section is received by the pressure receiving section composed of at least one of a vehicle component located on the front side of the operating member and additional airbag that is deployed and inflated on the front side of the vehicle with respect to the operating member.

3. A passenger protection system comprising:
an airbag apparatus (110; 120) according to claim 1 or 2, to be mounted to a vehicle comprising
detection mechanism (130) that can detect information relating to an occurrence of the vehicle accident; and
control mechanism (150) for controlling the gas supply mechanism;
**characterized in that** a pressure from the first airbag section is received by the operating member and a pressure from the second airbag section is received by the pressure receiving section when the control mechanism activates the gas supply mechanism based on a result detected by the detection mechanism.

4. The passenger protection system according to Claim 3, further comprising an additional airbag (124) that is deployed and inflated on the front side of the vehicle with respect to the operating member based on the result detected by the detection mechanism,
**characterized in that** the pressure receiving section is composed of at least one of the vehicle component located on the front side of the vehicle with respect to the operating member and the additional airbag.

5. The passenger protection system according to Claim 4,
**characterized in that** the additional airbag as the pressure receiving section is also used as an airbag that is deployed and inflated in a leg area of the driving passenger.

6. A vehicle comprising the passenger protection system (100; 200; 300) according to any one of Claims 3 to 5.

## Patentansprüche

1. Airbagvorrichtung zum Einbau in ein Fahrzeug (10) mit einem Einzelairbag (114; 124), der durch Zuführen von Gas aus einer Gaszuliefereinrichtung (112; 122) entfaltet und aufgeblasen wird,
**dadurch gekennzeichnet, dass** der Einzelairbag einen ersten Airbagabschnitt (114a) zum Rückhalten eines das Fahrzeug führenden Insassen (C), welcher sich in einem Raum zwischen dem das Fahrzeug führenden Insassen und einem Betätigungselement (18; 28; 38; 48) zum Lenken des Fahrzeugs, das bezüglich dem das Fahrzeug führenden Insassen an der Frontseite des Fahrzeugs vorgesehenen ist, entfaltet und aufgeblasen wird, und einen zweiten Airbagabschnitt (114b, 114c) aufweist, welcher sich bezüglich dem Betätigungselement an der Frontseite des Fahrzeugs entfaltet und aufgeblasen wird,
dass ein Druck vom ersten Airbagabschnitt durch das Betätigungselement aufgenommen wird und ein Druck vom zweiten Airbagabschnitt durch einen Druckaufnahmebereich (12, 14) aufgenommen wird, der bezüglich dem Betätigungselement an der Frontseite des Fahrzeugs vorgesehen ist, und
dass der Einzelairbag so ausgebildet ist, dass nach dem Rückhalten des das Fahrzeug führenden Insassen durch den ersten Airbagabschnitt der zweite Airbagabschnitt sich entfaltet und aufgeblasen wird, um eine Kraft, die der erste Airbagabschnitt vom das Fahrzeug führenden Insassen aufgenommen hat, zur Frontseite des Fahrzeugs bezüglich dem Betätigungselement abzuleiten.

2. Airbagvorrichtung nach Anspruch 1,
**dadurch gekennzeichnet, dass** der Druck vom zweiten Airbagabschnitt vom Druckaufnahmeabschnitt aufgenommen wird, der mindestens aus einer an der Frontseite des Betätigungselements befindlichen Fahrzeugkomponente und/oder einem Zusatzairbag gebildet wird, der sich bezüglich dem Betätigungselement an der Frontseite des Fahrzeugs entfaltet und aufgeblasen wird.

3. Insassenschutzsystem mit einer in ein Fahrzeug einzubauenden Airbagvorrichtung (110; 120) nach Anspruch 1 oder 2, mit:
einer Detektiereinrichtung (130), die eine Information in Zusammenhang mit dem Auftreten eines Fahrzeugunfalls ermitteln kann; und
einer Steuereinrichtung (150) zum Steuern der Gaszuliefereinrichtung,
**dadurch gekennzeichnet, dass** ein Druck vom ersten Airbagabschnitt durch das Betätigungselement aufgenommen wird und ein Druck vom zweiten Airbagabschnitt durch den Druckaufnahmeabschnitt aufgenommen wird, wenn die Steuereinrichtung die Gaszuflusseinrichtung basierend auf einem von der Detektiereinrichtung ermittelten Ergebnis aktiviert.

4. Insassenschutzsystem nach Anspruch 3, ferner mit einem Zusatzairbag (124), der sich basierend auf dem von der Detektiereinrichtung ermittelten Ergebnis bezüglich dem Betätigungselement an der Frontseite des Fahrzeugs entfaltet und aufgeblasen wird,
**dadurch gekennzeichnet, dass** der Druckaufnahmeabschnitt mindestens aus einer bezüglich dem Betätigungselement an der Frontseite des Fahrzeugs befindlichen Fahrzeugkomponente und/oder dem Zusatzairbag gebildet wird.

5. Insassenschutzsystem nach Anspruch 4,
**dadurch gekennzeichnet, dass** der Zusatzairbag als Druckaufnahmeabschnitt ebenfalls als Airbag, der sich im Beinbereich des das Fahrzeug führenden Insassen entfaltet und aufgeblasen wird, verwendet wird.

6. Fahrzeug mit einem Insassenschutzsystem (100; 200; 300) nach einem der Ansprüche 3 bis 5.

## Revendications

1. Appareil en forme de coussin de sécurité gonflable à monter dans un véhicule (10) comprenant :
un coussin de sécurité gonflable unique (114 ; 124) qui est déployé et gonflé par alimentation de gaz pour le déploiement et par gonflage à partir d'un mécanisme d'alimentation de gaz (112 ; 122),
**caractérisé en ce que** le coussin de sécurité gonflable unique définit une première section de coussin de sécurité gonflable (114a) pour retenir un passager conducteur (C) en étant déployé et gonflé dans l'espace ménagé entre le passager conducteur et un membre opératoire (18 ; 28 ; 38 ; 48) pour manoeuvrer le véhicule, disposé à l'avant du véhicule par rapport au passager conducteur, et une deuxième section de coussin de sécurité gonflable (114b, 114c) qui doit être déployé et gonflé à l'avant du véhicule par rapport au membre opératoire,
**en ce qu'**une pression émanant de la première section de coussin de sécurité gonflable est reçue par le membre opératoire, et une pression provenant de la deuxième section de coussin de sécurité gonflable est reçue par une section de réception de pression (12, 14) disposée à l'avant du véhicule par rapport au membre opératoire, et
**en ce que** le coussin de sécurité gonflable unique est configuré de telle sorte que, suite à la retenue du passager conducteur par la première section de coussin de sécurité gonflable, la deuxième section de coussin de sécurité gonflable se déploie et gonfle de façon à libérer une force reçue par la première section de coussin de sécurité gonflable depuis le passager conducteur jusqu'au côté avant du véhicule par rapport au membre opératoire.

2. Appareil en forme de coussin de sécurité gonflable selon la revendication 1, **caractérisé en ce que** la pression exercée par la deuxième section de coussin de sécurité gonflable est reçue par la section de réception de pression composée d'au moins un membre du groupe comprenant une composante du véhicule disposée à l'avant du membre opérationnel et un coussin de sécurité gonflable supplémentaire qui est déployé et gonflé à l'avant du véhicule par rapport au membre opératoire.

3. Système de protection de passager, comprenant :
un appareil en forme de coussin de sécurité (110 ; 120) selon la revendication 1 ou 2 à monter dans un véhicule, comprenant :
un mécanisme de détection (130) qui peut détecter des informations concernant la survenue d'un accident du véhicule ; et
un mécanisme de commande (150) pour commander le mécanisme d'alimentation du gaz ;
**caractérisé en ce qu'**une pression émanant de la première section de coussin de sécurité gonflable est reçue par le membre opératoire et une pression émanant de la deuxième section de coussin de sécurité gonflable est reçue par la section de réception de pression lorsque le mécanisme de commande active le mécanisme d'alimentation du gaz en se basant sur un résultat détecté par le mécanisme de détection.

4. Système de protection de passager selon la revendication 3, comprenant en outre un coussin de sécurité gonflable supplémentaire (124) qui est déployé et gonflé à l'avant du véhicule par rapport au membre opératoire, en se basant sur le résultat détecté par le mécanisme de détection,
**caractérisé en ce que** la section de réception de pression se compose d'au moins un membre comprenant la composante de véhicule disposé à l'avant du véhicule par rapport au membre opératoire et le coussin de sécurité gonflable supplémentaire.

5. Système de protection de passager selon la revendication 4, **caractérisé en ce que** le coussin de sécurité supplémentaire, à titre de section de réception de pression, est également utilisé comme coussin de sécurité gonflable qui est déployé et gonflé dans la zone des jambes du passager conducteur.

6. Véhicule comprenant le système de protection de passager (100; 200; 300) selon l'une quelconque des revendications 3 à 5.
